# EUROPEAN PATENT SPECIFICATION

(11) **EP 1 120 242 B1**
(45) Date of publication and mention of the grant of the patent: **08.06.2005**
(21) Application number: 01200312.5
(22) Date of filing: 29.01.2001
(51) Int. Cl.: B32B 9/02, B32B 21/04, E04F 15/02

(54) **Floor element and method for fitting and manufacturing floor elements**
Fussbodenelement und Verfahren zum Anbringen und zum Herstellen von Fussbodenelementen
Elément de plancher et procédé de mise en place et de fabrication des éléments de plancher

(30) Priority: 28.01.2000 NL 1014223
(43) Date of publication of application: 01.08.2001
(73) Proprietor: Karaat Natuurparket B.V., 9755 PR Onnen (NL)
(72) Inventor: Nienhuis, Jan, 9431 CG Westerbork (NL)
(74) Representative: Prins, Adrianus Willem, Mr. Ir.

(56) References cited:
- EP-A- 0 884 172
- EP-A- 0 911 462
- DE-A- 1 509 248
- GB-A- 2 142 355
- DATABASE WPI Section Ch, Week 199749 Derwent Publications Ltd., London, GB; Class A25, AN 1997-526859 XP002233397 & AU 16560 97 A (CORK & SEALS PTY LTD), 9 October 1997 (1997-10-09)

## Description

This invention relates to a floor element, as well as to a method for fitting floor elements, and to a method for manufacturing floor elements.

Floor elements from wood, for instance parquet strips, are known from practice and are used for constructing parquet floors. During the floor construction, such parquet strips are usually bonded to the subjacent floor by means of nails.

A drawback of such floors is that installing the floor properly is difficult, and time consuming even for an experienced skilled worker. In addition, the nails, even in the conventional covered form, constitute positions in the floor that are extra susceptible to wear; and repairing the floor is cumbersome. Also, such a floor is poorly resistant to moisture, and has poor sound-insulating properties.

The object of the invention is to provide a floor element with which it is simple to construct a floor which is durable, resistant to moisture and sound-insulating. To that end, the invention provides a floor element, with a wooden plate having a substantially flat upper side, characterized in that at least a portion of the underside of the plate is provided with a layer of cork, while the surface of the layer of cork remote from the plate is provided with a layer of contact adhesive.

By applying the floor elements according to the invention to a floor which is provided with a layer of contact adhesive, there is obtained, with the floor elements according to the invention, a floor having a wooden surface which is strong and wear-resistant, while the layer of cork provides for heat insulation, acoustic damping, and elasticity. Also, fitting the floor elements is simple. It is also possible for floor elements, once fitted, to be subsequently removed again. Further, the layer of contact adhesive between the cork and the floor constitutes an effective barrier to rising moisture.

It is observed that EP 0911462 discloses a floor element including a cork plate and a number of individual wooden parts. The cork plate has a number of recesses in each of which a wooden tile is placed. The wooden tiles are separated from each other by cork ridges. The cork plate has a lower surface on which a self-adhering layer is provided.

The invention will be further elucidated on the basis of a detailed description of a number of exemplary embodiments of the invention with reference to the drawings. In the drawings:
Fig. 1 shows in perspective a floor element according to the invention,
Fig. 2 shows a cross section along the line II-II' of the floor element from Fig. 1,
Fig. 3 shows a bottom view of a second floor element according to the invention,
Fig. 4 shows a cross section of the floor element from Fig. 3 along the line IV-IV',
Fig. 5 shows a bottom view of a third floor element according to the invention,
Fig. 6 shows a cross section of the floor element from Fig. 5 along the line VI-VI',
Fig. 7 shows a cross section of a fourth floor element according to the invention, and
Fig. 8 shows a cross section of floor elements according to the invention in mounted condition.

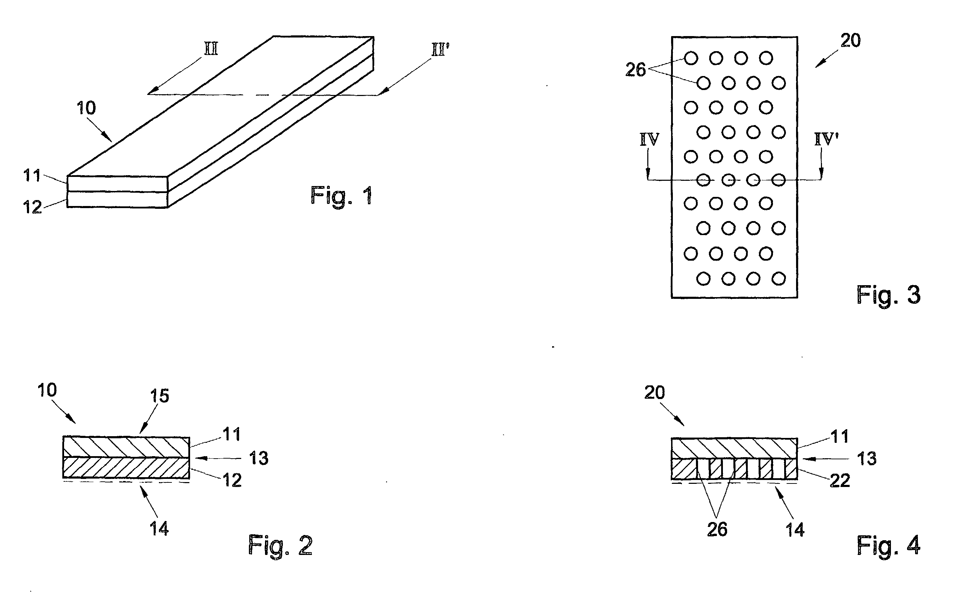

In Fig. 1 there is shown a floor element 10 according to the invention. The floor element 10 has a flat wooden plate 11 of an elongate rectangular shape. To an underside of the wooden plate 11, a cork plate 12 is attached by means of a glued joint 13. The cork plate 12 has the same shape as the wooden plate 11.

The plate 11 can be manufactured form any kind of wood that is suitable for use as floor. The thickness of the plate can be freely chosen, for instance depending on the loading and the desired wear resistance of the floor. For a floor which is hardly loaded, a thinner plate can be used, while for a heavily loaded floor a thicker plate can be used. A favorable thickness is in the range of from 2 to 15 mm. In particular, a thickness of between 5 and 7 mm is advantageous; with such a thickness, an optimum ratio between strength and wear resistance and wood consumption is obtained for most applications. The thickness of the plate 11 should preferably be constant.

The thickness of the cork plate 12 can be freely chosen, for instance depending on the loading and the desired insulation of the floor. For a hardly loaded floor a thinner plate can be used, while for a heavily loaded floor a thicker plate can be used. Also, the thickness of the wooden plate used can be taken into account. A favorable thickness is in the range of from 2 to 15 mm. In particular, a thickness of between 3 and 5 mm is advantageous; with such a thickness, an optimum ratio between strength and cork consumption is obtained for most applications.

For the glued joint 13, any type of adhesive can be chosen that is suitable for gluing wood to cork. Preferably, for this purpose, a contact adhesive based on neoprene or latex can be used.

On the side remote from the wooden plate 11, the cork plate 12 is provided with a layer of contact adhesive 14. The thickness of the layer 14 depends on the type of contact adhesive used. The contact adhesive is chosen such that it can be stored for a long time in open condition without the layer of adhesive being affected, preferably longer than one year.

Before applying floor elements 10 to a substrate, the substrate should be prepared. The substrate should be flat; suitable are, for instance, floors finished with concrete, stone or wood. Low-gradient undulations in the surface are no objection. After making the floor surface dust-free, a layer of contact adhesive is applied. This contact adhesive is of such a type that the applied layer adheres to the layer 14 of the floor element 10. Preferably, on the floor the same adhesive is used as on the floor element. After the adhesive has been allowed to dry for some time, depending on the type of adhesive, the floor is ready for fitting the floor elements 10.

Constructing the floor occurs, according to the invention, by placing respective floor elements 10, by the side thereof that is provided with the adhesive layer 14, at the desired position on the floor provided with the adhesive layer, and pressing on them. By pressing-on, there is obtained with the two layers of contact adhesive a strong glued joint through which the floor element is bonded to the subjacent floor over the entire surface. As a result, any slopes of the floor can be followed. It also prevents the edges of the floor elements from standing up, a phenomenon sometimes referred to as 'dishing'. The force with which the floor elements are pressed onto the subjacent floor for obtaining the bond depends on the type of adhesive used; with many conventional types of contact adhesive, a relatively slight force, for instance as exerted with a rubber hammer, yields a more than sufficient bonding. A next floor element 10 is positioned, butting or square, against the floor element already fitted, in the desired pattern.

Because the floor elements in mounted position are held against the floor over their entire surface, it is not necessary for the floor elements to be completely flat in rest condition. Floor elements that are slightly arched or warped can be used without disadvantage. While the floor element is being fitted on the floor, the arch is eliminated by pressing on the floor element, whereafter the glue joint keeps the floor element in the flat condition attained. As a consequence, the material requirements imposed on the wood to be used are lower, so that the costs of raw materials are lower.

By using a contact adhesive based on water, such as, for instance, a neoprene or latex contact adhesive, the invention can be advantageously used on damp concrete or cement covering floors. In this case, the contact adhesive is applied to the damp floor; thereafter, the contact adhesive can dry to the condition desired for use. If desired, drying can be wholly or partly forced, for instance through mechanical ventilation by fans or by heat radiation.

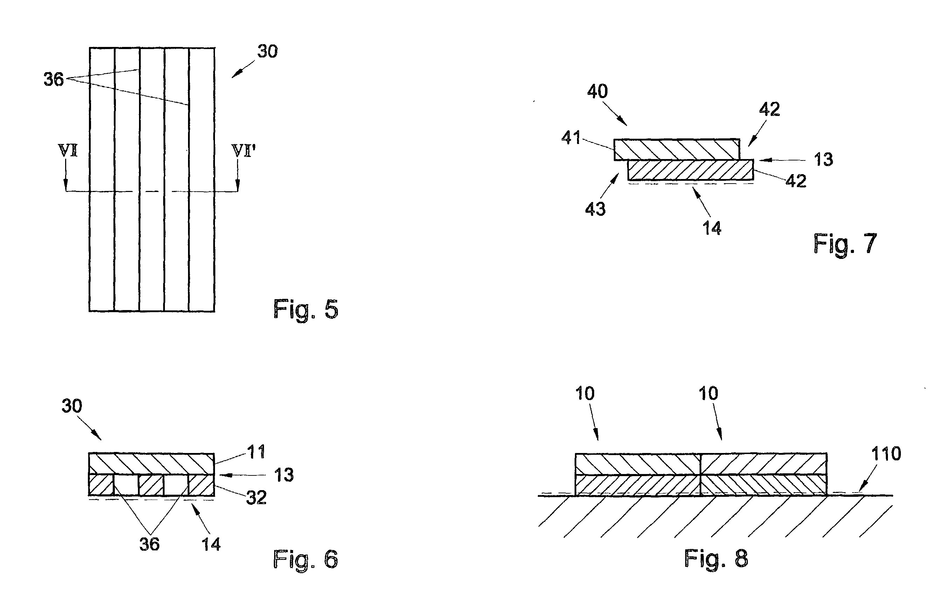

In the installed operative condition as shown in Fig. 8, the floor elements according to the invention yield a floor with a wooden surface, which is strong and wear-resistant, while the cork layer 12 provides for heat insulation, acoustic damping, and elasticity. If desired, the wooden floor surface may be finished further. The resilience of the floor makes it highly suitable for use in sports floors, such as, for instance, basketball courts. The adhesive layers 14 and 110, the cork plate 12 and the glued joint 13 then constitute an effective barrier layer against damp rising from the floor 100; attack of the wooden plate 11 by damp rising from the floor 100 is thereby prevented to a far-reaching extent.

According to the invention, repair of the assembled floor can take place in a simple manner by removing a floor element to be replaced from the pattern laid. To that end, a suction element, such as, for instance, a vacuum suction cup, is placed on the element to be removed, so that the suction cup is firmly but detachably connected with the floor element in question. Thereupon the floor element can be pulled by way of the suction cup from the floor 100, whereby the adhesive bond between the adhesive layer 14 of the floor element and the adhesive layer 110 of the floor 100 is broken. The surrounding floor elements 10 are not disturbed during the removal and remain unchanged in position. Thereupon the removed floor element can be repaired and be placed back by fitting it in the free position again and pressing on it. If desired, also a new floor element can be placed in the free position.

The invention also provides a method for manufacturing the floor elements according to the invention as described above. To that end, first wooden plates are sawn to the desired size, and the undersides of the wooden plates are roughened, for instance through abrasion, for instance with a sanding belt or sandpaper of a grain of between 10 and 30. The sanded plates are thereupon made dust-free, whereafter the undersides are provided with a layer of contact adhesive. The contact adhesive is then dried for a given time.

Likewise, cork plates are sawn to the size in question and roughened at the top and bottom, for instance through abrasion, for instance with a sanding belt or sandpaper of a grain of between 10 and 30. The sanded cork plates are thereupon made dust-free, whereafter one side is provided with a layer of contact adhesive. The contact adhesive is then allowed to dry for a given time.

Next, a wooden plate is fitted onto a cork plate, by pressing against each other the respective sides provided with adhesive. The underside of the cork layer of the assembly now formed is provided with a layer of contact adhesive, yielding a floor element as shown in Figs. 1 and 2. The adhesive is allowed to dry for a given time; after this drying, the floor element is ready for use. If desired, the floor element can be packaged dust-free for storage. In packed condition, the floor element can be stored for a long time without the condition of the adhesive layer deteriorating. If desired, the exposed cork layer surface provided with an adhesive layer may be provided with a protective layer such as, for instance, a removably applied film. Shortly before use, this film can be removed from the adhesive layer without damaging the adhesive layer.

Figs. 3 and 4 show a second exemplary embodiment of a floor element 20 according to the invention. The floor element 20 has a wooden plate 11 which corresponds to the plate 11 of the floor element 10. In a manner corresponding to floor element 10, a cork plate 22 is fitted under the plate 11 by means of a glued joint 13. In a manner corresponding to the first example, the outer surface of the cork plate 22 is provided with a layer of contact adhesive 14. The cork plate 22, in contrast to the cork plate 12 from the first exemplary embodiment, is provided with round through holes 26. In the condition when fitted on the floor, the holes 26 constitute respective channels through which heat can be transported. This renders the floor element 20 suitable in particular for use on floors with built-in floor heating. Also, the holes 26 yield a saving on cork material. According to the invention, it is by no means requisite to make the holes 26 circular; other shapes are also applicable.

Figs. 5 and 6 show a third exemplary embodiment of a floor element 30 according to the invention. The floor element 30 has a wooden plate 11 which corresponds to the plate 11 of the floor element 10. In a manner corresponding to floor element 10, a cork plate 32 is fitted under the plate 11 by means of a glued joint 13. In a manner corresponding to the first example, the outer surface of the cork plate 32 is provided with a layer of contact adhesive 14. The cork plate 22, in contrast to the cork plate 12 from the first exemplary embodiment, is provided with recesses 36, which do not extend throughout the thickness of the cork plate 32. In installed condition, the floor element 30, by virtue of the recesses, yields a further improved elastic action, as well as an improved heat transfer, while the wooden plate remains optimally screened from any damp rising from the subjacent floor.

Fig. 7 shows a fourth exemplary embodiment of a floor element 40 according to the invention. The floor element 40 has a wooden plate 41 which corresponds to the plate 11 of the floor element 10. In a manner corresponding to floor element 10, a cork plate 42 is fitted under the plate 11 by means of a glued joint 13. However, in contrast to the floor element 10, the cork plate 42 is slightly offset with respect to the plate 41. The projecting edges of the plate 41 and the cork plate 42, respectively, constitute coupling means in the form of respective recesses 42, 43 in the floor element 40. In a manner corresponding to the first example, the outer surface of the cork plate 42 is provided with a layer of contact adhesive 14. In installed condition, the respective coupling means 42, 43 of adjacent floor elements 40 engage each other. This provides the advantage that constructing the floor is further simplified.

## Claims

1. A floor element comprising a wooden plate (11, 41) having a substantially flat upper side (15), **characterized in that** at least a portion of the underside of the plate (11, 41) is provided with a layer of cork (12, 22, 32, 42), while the surface of the layer of cork (12, 22, 32, 42) remote from the plate is provided with a layer of contact adhesive (14).

2. A floor element according to claim 1, **characterized in that** the contact adhesive has an open time of at least one year.

3. A floor element according to claim 1 or 2, **characterized in that** the layer of cork (12, 32, 42) extends uninterrupted over the underside of the wooden plate (11, 41).

4. A floor element according to any one of the preceding claims, **characterized in that** the surface of the layer of cork (22, 32) remote from the wooden plate (11, 41) is provided with recesses (26, 36).

5. A floor element according to claim 4, **characterized in that** at least one of the recesses (26) extends as far as the underside of the wooden plate (11).

6. A floor element according to any one of the preceding claims, **characterized in that** the wooden plate (11, 41) substantially has a thickness in the range of from 2 to 15 mm.

7. A floor element according to any one of the preceding claims, **characterized in that** the layer of cork (12, 22, 32, 42) substantially has a thickness in the range of from 2 to 15 mm.

8. A floor element according to any one of the preceding claims, **characterized by** flat side edges extending perpendicularly to the upper side of the wooden plate (11, 41).

9. A floor element according to any one of claims 1-7, **characterized in that** the side edges are provided with coupling means (42, 43) arranged for engaging, in the fitted condition, the coupling means of an adjacent floor element.

10. A floor element according to any one of the preceding claims, **characterized by** a protective layer removably provided on the layer of contact adhesive (14).

11. A floor element according to claim 10, **characterized in that** the protective layer is formed by a plastic film.

12. A floor element according to any one of the preceding claims, **characterized in that** the contact adhesive is a contact adhesive on a neoprene basis.

13. A method for fitting floor elements according to any one of the preceding claims on a floor, comprising the steps of
applying a layer of contact adhesive to the floor,
allowing the applied contact adhesive to dry,
positioning floor elements at a desired position on the floor, and
pressing on the floor elements.

14. A method for manufacturing floor elements according to any one of claims 1-12, comprising the steps of
roughening an underside of a wooden plate,
applying contact adhesive to the roughened underside of the wooden plate,
roughening an upper side of a plate of cork,
applying contact adhesive to the roughened upper side of the plate of cork,
allowing the contact adhesive to dry,
contacting the respective sides of the wooden plate and the cork plate that are provided with contact adhesive, followed by the mutual pressing-on of the two plates, and
applying a layer of contact adhesive to the underside of the cork plate remote from the wooden plate.

15. A method according to claim 14, **characterized by** the step of roughening the underside of the wooden plate through abrasion.

16. A method according to claim 14 or 15, **characterized by** the step of roughening the upper side of the plate of cork through abrasion.

17. A method according to claim 15 or 16, **characterized by** the step of abrasion with an abrasive surface of a roughness in the range of grain 10-30.

18. A parquet floor, comprising floor elements according to any one of claims 1-12.

19. A method for repairing or replacing an element from a parquet floor according to claim 18, comprising the steps of
applying a vacuum suction cup to an element to be removed,
pulling the element to be removed with the vacuum suction cup from the substrate, and
fitting a floor element according to any one of claims 1-11 in the free position in the parquet floor.

## Patentansprüche

1. Bodenelement mit einer Holzplatte (11,41) mit im Wesentlichen flacher Oberseite (15),
**dadurch gekennzeichnet, dass** mindestens ein Teil der Unterseite der Platte (11,41) mit einer Korkschicht (12,22,32,42) versehen ist, wobei die von der Platte abgewandte Oberfläche der Korkschicht (12,22,32, 42) mit einer Kontaktkleberschicht (14) versehen ist.

2. Bodenelement nach Anspruch 1, **dadurch gekennzeichnet, dass** der Kontaktkleber im offenen Zustand eine Benutzungsbereitschaftszeit von mindestens einem Jahr hat.

3. Bodenelement nach Anspruch 1 oder 2, **dadurch gekennzeichnet, dass** sich die Korkschicht (12,32,42) ununterbrochen über die Unterseite der Holzplatte (11,41) erstreckt.

4. Bodenelement nach einem der vorhergehenden Ansprüche, **dadurch gekennzeichnet, dass** die von der Holzplatte (11,41) abgewandte Oberfläche der Korkschicht (22,32) mit Ausnehmungen (26,36) versehen ist.

5. Bodenelement nach Anspruch 4, **dadurch gekennzeichnet, dass** sich mindestens eine der Ausnehmungen (26) bis zu der Unterseite der Holzplatte (11) erstreckt.

6. Bodenelement nach einem der vorhergehenden Ansprüche, **dadurch gekennzeichnet, dass** die Holzplatte (11,41) eine Dicke im Wesentlichen im Bereich von 2 bis 15 mm hat.

7. Bodenelement nach einem der vorhergehenden Ansprüche, **dadurch gekennzeichnet, dass** die Korkschicht (12,22,32,42) eine Dicke im Wesentlichen im Bereich von 2 bis 15 mm hat.

8. Bodenelement nach einem der vorhergehenden Ansprüche, **gekennzeichnet durch** flache Seitenränder, die rechtwinklig zur Oberseite der Holzplatte (11,41) verlaufen.

9. Bodenelement nach einem der Ansprüche 1-7, **dadurch gekennzeichnet, dass** die Seitenränder mit Verbindungsvorrichtungen (42,43) versehen sind, die derart angeordnet sind, dass sie im zusammengefügten Zustand mit den Verbindungsvorrichtungen eines benachbarten Bodenelements zusammengreifen.

10. Bodenelement nach einem der vorhergehenden Ansprüche, **gekennzeichnet durch** eine Schutzschicht, die lösbar an der Kontaktkleberschicht (14) angeordnet ist.

11. Bodenelement nach Anspruch 10, **dadurch gekennzeichnet, dass** die Schutzschicht einen Plastikfilm aufweist.

12. Bodenelement nach einem der vorhergehenden Ansprüche, **dadurch gekennzeichnet, dass** der Kontaktkleber ein Kontaktkleber auf Neopren-Basis ist.

13. Verfahren zum Befestigen von Bodenelementen nach einem der vorhergehenden Ansprüche an einem Boden, mit folgenden Schritten:
Auftragen einer Kontaktkleberschicht auf den Boden,
Trocknenlassen des aufgetragenen Kontaktklebers,
Positionieren von Bodenelementen an gewünschten Positionen auf dem Boden, und
Drücken auf die Bodenelemente.

14. Verfahren zum Herstellen von Bodenelementen nach einem der Ansprüche 1-12, mit folgenden Schritten:
Aufrauhen der Unterseite einer Holzplatte,
Auftragen von Kontaktkleber auf die aufgerauhte Unterseite der Holzplatte,
Aufrauhen der Oberseite einer Korkplatte,
Auftragen von Kontaktkleber auf die aufgerauhte Oberseite der Korkplatte,
Trocknenlassen des Kontaktklebers,
gegenseitiges Kontaktieren der betreffenden Seiten der Holzplatte und der Korkplatte, die mit Kontaktkleber versehen sind, und anschließendes Andrücken der beiden Platten gegeneinander, und
Auftragen einer Kontaktkleberschicht auf die der Holzplatte abgewandte Unterseite der Korkplatte.

15. Verfahren nach Anspruch 14, **gekennzeichnet durch** den Schritt des Aufrauhens der Unterseite der Holzplatte **durch** Abrasion.

16. Verfahren nach Anspruch 14 oder 15, **gekennzeichnet durch** den Schritt des Aufrauhens der Oberseite der Korkplatte **durch** Abrasion.

17. Verfahren nach Anspruch 15 oder 16, **gekennzeichnet durch** den Schritt des Aufrauhens mittels einer Abrasivfläche mit einer Rauhigkeit im Körnigkeitsbereich von 10-30.

18. Parkettboden mit Bodenelementen nach einem der Ansprüche 1-12.

19. Verfahren zum Reparieren oder Ersetzen eines Elementes aus einem Parkettboden gemäß Anspruch 18, mit folgenden Schritten:
Applizieren eines Vakuum-Saugnapfes an einem zu entfernenden Element,
Wegziehen des zu entfernenden Elements von dem Substrat mittels des Vakuum-Saugnapfs, und
Befestigen eines Bodenelements nach einem der Ansprüche 1-11 an der freien Position im Parkettboden.

## Revendications

1. Elément de plancher comprenant une plaque de bois (11, 41) possédant une face supérieure sensiblement plane (15), **caractérisé en ce qu'**au moins une portion de la partie de la face inférieure de la plaque (11, 41) est pourvue d'une couche de liège (12, 22, 32, 42), tandis que la surface de la couche de liège (12, 22, 32, 42) distante de la plaque est pourvue d'une couche d'un adhésif de contact (14).

2. Elément de plancher selon la revendication 1, **caractérisé en ce que** l'adhésif de contact possède une durée d'ouverture d'au moins un an.

3. Elément de plancher selon la revendication 1 ou 2, **caractérisé en ce que** la couche de liège (12, 22, 32, 42) s'étend de façon ininterrompue au-dessus de la face inférieure de la plaque de bois (11, 41).

4. Elément de plancher selon l'une quelconque des revendications précédentes, **caractérisé en ce que** la surface de la couche de liège (22, 32) distante de la plaque de bois (11, 41) est pourvue de renfoncements (26, 36).

5. Elément de plancher selon la revendication 4, **caractérisé en ce qu'**au moins l'un des renfoncements (26) s'étend jusqu'à la face inférieure de la plaque de bois (11).

6. Elément de plancher selon l'une quelconque des revendications précédentes, **caractérisé en ce que** la plaque de bois (11, 41) possède essentiellement une épaisseur dans la gamme de 2 à 15 mm.

7. Elément de plancher selon l'une quelconque des revendications précédentes, **caractérisé en ce que** la couche de liège (12, 22, 32, 42) possède essentiellement une épaisseur dans la gamme de 2 à 15 mm.

8. Elément de plancher selon l'une quelconque des revendications précédentes, **caractérisé par** des bords latéraux plats s'étendant perpendiculairement à la face supérieure de la plaque de bois (11, 41).

9. Elément de plancher selon l'une quelconque des revendications 1 à 7, **caractérisé en ce que** les bords latéraux sont pourvus de moyens de couplage (42, 43) agencés de manière à coopérer, à l'état monté, avec les moyens de couplage d'un élément de plancher adjacent.

10. Elément de plancher selon l'une quelconque des revendications précédentes, **caractérisé par** une couche de protection prévue de façon amovible sur la couche de l'adhésif de contact (14).

11. Elément de plancher selon la revendication 10, **caractérisé en ce que** la couche de protection est formée d'un film plastique.

12. Elément de plancher selon l'une quelconque des revendications précédentes, **caractérisé en ce que** l'adhésif de contact est un adhésif de contact à base de néoprène.

13. Procédé pour monter des éléments de plancher selon l'une quelconque des revendications précédentes, sur un plancher, comprenant les étapes consistant à
appliquer une couche d'adhésif de contact au plancher,
laisser sécher l'adhésif de contact appliqué,
positionner des éléments de plancher dans une position désirée sur le plancher, et
appliquer une pression aux éléments de plancher.

14. Procédé pour fabriquer des éléments de plancher selon l'une quelconque des revendications 1 à 12, comprenant les étapes consistant à
rendre rugueuse une partie inférieure de la plaque de bois,
appliquer un adhésif de contact à la face inférieure rendue rugueuse de la plaque de bois,
rendre rugueuse une face supérieure d'une plaque de liège,
appliquer un adhésif de contact à la face supérieure rugueuse de la plaque de liège,
laisser sécher l'adhésif de contact,
placer en contact les faces respectives de la plaque de bois et de la plaque de liège, qui sont pourvues de l'adhésif de contact, ceci étant suivi par le serrage mutuel des deux plaques, et
appliquer une couche d'adhésif de contact à la face inférieure de la plaque de liège distante de la plaque de bois.

15. Procédé selon la revendication 14, **caractérisé par** l'étape consistant à rendre rugueuse la face inférieure de la plaque de bois par abrasion.

16. Procédé selon la revendication 14 ou 15, **caractérisé par** l'étape consistant à rendre rugueuse la face supérieure de la plaque en liège par abrasion.

17. Procédé selon la revendication 15 ou 16, **caractérisé par** l'étape d'abrasion à l'aide d'une surface abrasive ayant une rugosité dans la gamme de granulométrie 10 - 30.

18. Plancher de parquet comprenant des éléments de plancher selon l'une quelconque des revendications 1 à 12.

19. Procédé pour réparer ou remplacer un élément dans un plancher de parquet selon la revendication 18, comprenant les étapes consistant à
appliquer une ventouse sur un élément devant être retiré,
tirer l'élément devant être retiré avec la ventouse à partir du substrat, et
mettre un élément de plancher selon l'une quelconque des revendications 1 à 11, dans la position libre dans le plancher de parquet.
